# EUROPÄISCHE PATENTSCHRIFT

(11) **EP 2 996 911 B1**
(45) Veröffentlichungstag und Bekanntmachung des Hinweises auf die Patenterteilung: **15.08.2018**
(21) Anmeldenummer: 14723037.9
(22) Anmeldetag: 05.05.2014
(51) Int. Cl.: B60S 1/38, B60S 1/40, B60S 1/52

(54) **WISCHARM FÜR EINE SCHEIBENWISCHANLAGE EINES KRAFTFAHRZEUGS, WISCHBLATT UND WISCHEINRICHTUNQ**
WIPER ARM FOR A WINDSCREEN WIPER SYSTEM OF A MOTOR VEHICLE, WIPER FRAME AND WIPING DEVICE
WISCHARM FÜR EINE SCHEIBENWISCHANLAGE EINES KRAFTFAHRZEUGS, WISCHBLATT UND WISCHEINRICHTUNG

(30) Priorität: 13.05.2013 DE 102013104902
(43) Veröffentlichungstag der Anmeldung: 23.03.2016
(73) Patentinhaber: Valeo Systèmes d'Essuyage, 78322 Le Mesnil Saint Denis (FR)
(72) Erfinder: SCHAEUBLE, Michael, 71665 Vaihingen an der Enz (DE)
(74) Vertreter: Callu Danseux, Violaine
(86) Internationale Anmeldenummer: PCT/EP2014/059137
(87) Internationale Veröffentlichungsnummer: WO 2014/184037

(56) Entgegenhaltungen:
- DE-A1-102010 047 098
- DE-A1-102010 049 740
- DE-A1-102011 001 689
- FR-A1- 2 968 256

## Beschreibung

### Stand der Technik

Die Erfindung betrifft einen Wischarm für eine Scheibenwischanlage eines Kraftfahrzeugs nach dem Oberbegriff des Anspruchs 1. Ferner betrifft die Erfindung ein Wischblatt, zur Befestigung an einem erfindungsgemäßen Wischarm sowie eine Wischeinrichtung, die aus einem erfindungsgemäßen Wischarm sowie einem Wischblatt besteht.

Ein Wischarm nach dem Oberbegriff des Anspruchs 1 ist bereits bekannt. Er ermöglicht eine Zuführung von Waschflüssigkeit zu einem mit dem Wischarm verbundenen Wischblatt durch ein im Wischarm angeordnetes Adapterelement, wobei die Verbindung zwischen einem Wischblattadapter und dem Adapterelement automatisch hergestellt wird. Die Montage bzw. Demontage des Wischblatts erfolgt durch eine einzige, senkrecht zum Aufnahmebereich verlaufende Bewegung des Wischblatts.

Ein weiterer Wischarm ist aus der DE 10 2011 118 220 A1 bekannt. Der bekannte Wischarm weist in einem Aufnahmebereich für einen Wischblattadapter eines Wischblatts einen U-förmigen Querschnitt auf. Auf der dem Wischblattadapter zugewandten Seite sind an den Seitenwänden des Aufnahmebereichs, ausgehend von jeweils einer unteren Begrenzungskante der Seitenwand, Aufnahmeöffnungen für an dem Wischblattadapter angeordnete Vorsprünge ausgebildet. Darüber hinaus ist der Aufnahmebereich des Wischarms von einem ebenfalls im Wesentlichen einen U-förmigen Querschnitt aufweisenden Sicherungselement überdeckt, das zwischen einer Montage- bzw. Demontagestellung für das Wischblatt und einer Betriebsstellung für das Wischblatt, in der das Wischblatt an dem Wischarm gesichert ist, verschiebbar angeordnet ist. Die Montage bzw. Demontage des Wischblatts am Wischarm erfolgt ebenfalls senkrecht zur Erstreckung des Wischblatts bzw. des Wischarms.

Weiterhin sind aus dem Stand der Technik sogenannte "Aqua-Blade"-Wischblätter bekannt, bei denen eine Waschflüssigkeit zu an den Längsseiten des Wischblatts ausgebildeten Sprühöffnungen geführt wird. Die Versorgung des Wischblatts mit der Waschflüssigkeit erfolgt dabei üblicherweise über eine innerhalb des Wischarms geführte Versorgungsleitung in Form eines flexiblen Schlauchs. Dieser Schlauch ist hydraulisch zumindest mittelbar mit dem Wischblattadapter verbunden. Wesentlich dabei ist, dass die aus dem Stand der Technik bekannten Verbindungen dabei üblicherweise in Längsrichtung des Wischarms erfolgen, so dass derartige Verbindungen nicht dazu geeignet sind, bei dem eingangs erwähnten Wischarm bei einer Montage- bzw. Demontage des Wischblatts gleichzeitig und ohne zusätzlichen manuellen Aufwand die hydraulische Versorgung des Wischblatts mit Waschflüssigkeit sicherzustellen. FR-A-2968256 offenbart den Oberbegriff der Ansprüche 1 und 5. Offenbarung der Erfindung Ausgehend von dem dargestellten Stand der Technik liegt der Erfindung die Aufgabe zugrunde, einen Wischarm für eine Scheibenwischanlage eines Kraftfahrzeugs nach dem Oberbegriff des Anspruchs 1 derart weiterzubilden, dass dieser dazu geeignet ist, einerseits bei einer Montage bzw. Demontage des Wischblatts an bzw. von dem Wischarm ohne zusätzlichen Aufwand die hydraulische Versorgung des Wischblatts mit Waschflüssigkeit sicherzustellen, und andererseits auf das aus dem Stand der Technik bekannte Sicherungselement, das mit dem Wischarm verbunden ist, verzichten zu können.

Diese Aufgabe wird erfindungsgemäß bei einem Wischarm für eine Scheibenwischanlage eines Kraftfahrzeugs mit den Merkmalen des Anspruchs 1 dadurch gelöst, dass der Auslass zumindest annähernd in Richtung der Wischarmlängsachse im Aufnahmebereich verläuft, und dass der Aufnahmebereich dazu ausgebildet ist, eine Montage bzw. Demontage des Wischblattadapters durch zwei erforderliche Bewegungen am Wischblattadapter in unterschiedliche Richtungen zu ermöglichen.

Vorteilhafte Weiterbildungen des erfindungsgemäßen Wischarms für eine Scheibenwischanlage eines Kraftfahrzeugs sind in den Unteransprüchen angegeben. Nach der Erfindung ist es vorgesehen, dass der Aufnahmebereich einen U-förmigen Querschnitt mit zwei zueinander parallelen Seitenwänden und einer die beiden Seitenwände verbindenden Querwand aufweist, und mit wenigstens zwei, an den Seitenwänden ausgebildeten Aufnahmeöffnungen zur Aufnahme von am Wischblattadapter angeordneten Erhebungen in der zweiten Montage- bzw. Demontagerichtung, wobei die Aufnahmeöffnungen zumindest im wesentlichen senkrecht zur Querwand verlaufen.

Zur Befestigung bzw. Anordnung des Adapterelements im Wischarm ist es nach der Erfindung vorgesehen, dass das Adapterelement auf der der Seitenwand zugewandten Seite einen Befestigungsfortsatz aufweist, der in eine einen geschlossenen Querschnitt aufweisende Aufnahmeöffnung der Seitenwand hineinragt, und dass die Querschnitte der Aufnahmeöffnung und des Befestigungsfortsatzes so aufeinander abgestimmt sind, dass das Adapterelement in der Aufnahmeöffnung zumindest im Wesentlichen ortsfest angeordnet ist. Ggf. wird aus Toleranzgründen der Bauteile eine gewisse Beweglichkeit zugelassen.

Ganz besonders bevorzugt ist es, wenn das Adapterelement zusätzlich der Stromzuführung eines eine Heizeinrichtung aufweisenden Wischblatts mittels des Wischblattadapters ausgebildet ist. Dadurch erfüllt das Adapterelement eine zusätzliche Funktion, ohne dass ein zusätzliches Bauteil zur Anordnung bzw. Befestigung von Stromführungselementen erforderlich ist.

Um bei der Montage bzw. Demontage des Wischblatts neben der (automatischen) Verbindung bzw. dem Lösen der hydraulischen Verbindung gleichzeitig ohne zusätzlichen Aufwand die entsprechenden elektrischen Verbindungen auszubilden bzw. zu lösen, ist es besonders bevorzugt vorgesehen, dass die auf der dem Adapterelement zugewandten Seite des Wischblattadapters angeordneten, der Stromzuführung dienenden Führungselemente parallel zu dem Auslass angeordnet sind.

Eine zusätzliche mechanische Befestigung bzw. Kopplung des Wischblattadapters mit dem Wischarm lässt sich erzielen, wenn an den Seitenwänden des Wischarms im Bereich einer offenen Stirnseite des Aufnahmebereichs von der Stirnseite des Wischarms wegragende, und mit den Seitenwänden ausgerichtete Vorsprünge vorgesehen sind, die dazu ausgebildet sind, den Wischblattadapter in seiner Betriebsstellung in einer senkrecht zur ersten Montage- bzw. Demontagerichtung verlaufenden Richtung in dem Aufnahmebereich zu halten.

Die Erfindung umfasst auch ein Wischblatt, zur Befestigung an einem erfindungsgemäßen Wischarm, mit einem Wischblattadapter, der dazu ausgebildet ist, in einem Wischarm aufgenommen zu werden, wobei an dem Wischblattadapter wenigstens ein Einlass zur Zuführung einer Waschflüssigkeit ausgebildet ist, und wobei der wenigstens eine Einlass parallel zu einer ersten Montage- bzw. Demontagerichtung des Wischblattadapters ausgerichtet ist. Erfindungsgemäß ist es vorgesehen, dass der Wischblattadapter aus wenigstens zwei Wischblattadapterelementen besteht, und dass die wenigstens zwei Wischblattadapterelemente dazu ausgebildet sind, in einer im Wesentlichen senkrecht zur ersten Montage- bzw. Demontagerichtung angeordneten zweiten Montage- bzw. Demontagerichtung in dem Wischarm aufgenommen zu werden.

Um den Wischblattadapter bzw. das Wischblatt in der Betriebsstellung des Wischblatts an dem Wischarm zu befestigen, ist es nach der Erfindung vorgesehen, dass an einem ersten Wischblattadapterelement des Wischblattadapters an dessen Seitenwänden Erhebungen bzw. Fortsätze zum Einführen in Aufnahmeöffnungen eines Wischarms ausgebildet sind, und dass die Erhebungen von dem zweiten Wischblattadapterelement in der Betriebsstellung des Wischblatts in den Aufnahmeöffnungen des Wischarms blockiert sind.

Um eine Arretierung des Wischblatts im Wischarm in Richtung der ersten Montage- bzw. Demontagerichtung zu erzielen, ist es bevorzugt vorgesehen, dass zwischen zwei der Wischblattadapterelemente eine Rastverbindung ausgebildet ist, die die beiden Wischblattadapterelemente in Richtung der ersten Montage- bzw. Demontagerichtung zueinander fixiert.

Alternativ kann es jedoch auch vorgesehen sein, dass zwischen dem zweiten Wischblattadapterelement und dem Adapterelement, das in dem Aufnahmebereich des Wischarms angeordnet ist und der Zuführung der Waschflüssigkeit dient, eine Rastverbindung ausgebildet ist, die das zweite Wischblattadapterelement in Richtung der ersten Montage- bzw. Demontagerichtung fixiert.

Darüber hinaus findet die Fixierung bzw. Befestigung des Wischblattadapters im Wischarm dadurch statt, dass in dem zweiten Wischblattadapterelement Öffnungen zur Aufnahme von am Wischarm ausgebildeten Vorsprüngen vorgesehen sind, die dazu ausgebildet sind, den Wischblattadapter in seiner Betriebsstellung in einer senkrecht zur ersten Montage- bzw. Demontagerichtung verlaufenden Richtung zu halten.

Beim Stand der Technik besteht der Wischblattadapter üblicherweise aus zwei, schwenkbar zueinander angeordneten Wischblattadapterelementen und einem Sicherungselement, das am Wischarm angeordnet bzw. befestigt ist, um den Wischblattadapter in der Betriebsstellung am Wischarm zu fixieren. Die Funktion des Sicherungselementes wird erfindungsgemäß durch das erste Wischblattadapterelement realisiert. Darüber hinaus ist es bevorzugt vorgesehen, dass der Wischblattadapter ein drittes Wischblattadapterelement umfasst, das unmittelbar mit einem Wischblattkörper des Wischblatts verbunden ist, und dass das erste und das dritte Wischblattadapterelement schwenkbar zueinander angeordnet sind.

Besonders bevorzugt ist es, wenn das dritte Wischblattadapterelement einen U-förmigen Querschnitt aufweist, in dem das zweite Wischblattadapterelement zumindest bereichsweise aufgenommen ist, und wenn das erste Wischblattadapterelement einen U-förmigen Querschnitt aufweist, der das zweite Wischblattadapterelement bereichsweise aufnimmt und das dritte Wischblattadapterelement im Bereich dessen Seitenwänden umgreift.

Weiterhin ist es besonders bevorzugt vorgesehen, wenn das zweite Wischblattadapterelement Fortsätze aufweist, die in Führungsschlitze des dritten Wischblattadapterelements schwenk- und verschiebbar angeordnet sind.

In einer abgewandelten Ausführungsform der Erfindung ist es vorgesehen, dass das erste Wischblattadapterelement und das zweite Wischblattadapterelement durch eine Formschlussverbindung in Richtung der zweiten Montage- bzw. Demontagerichtung zueinander positioniert sind. Eine derartige Ausbildung ermöglicht es, die beiden Wischblattadapterelemente als vormontierbare Baugruppe auszubilden, die anschließend mit dem dritten Wischblattadapterelement verbunden wird. Insbesondere wird dadurch die gewünschte Anordnung der beiden genannten Wischblattadapterelemente in einer gemeinsamen, zum Wischarm parallelen Ebene ermöglicht.

In konstruktiv bevorzugter Ausgestaltung der Formschlussverbindung weist diese an einem der Wischblattadapterelemente ausgebildete Rasthakenelemente auf, die am anderen der Wischblattadapterelemente ausgebildete Führungen umgreifen, wobei die Rasthakenelemente derart ausgebildet sind, dass durch eine Relativbewegung in einer Montagerichtung der beiden Wischblattadapterelemente die Rasthakenelemente die Führungen umgreifen und dabei mit den Führungen verrasten. Diese konstruktive Ausbildung ermöglicht eine besonders einfache Montage durch ein Gegeneinanderbewegen der beiden Wischblattadapterelemente.

Eine alternative Formschlussverbindung ist derart ausgebildet, dass diese an einem der Wischblattadapterelemente ausgebildete, parallel zur ersten Montage- bzw. Demontagerichtung angeordnete Führungsstege mit zwischen den Führungsstegen ausgebildeten Aussparungen aufweist, wobei in die Aussparungen an dem anderen der Wischblattadapterelemente ausgebildete Haltestege bis in eine Höhe unterhalb der Führungsstege einführbar sind, und wobei die Haltestege nach dem Einführen in die Führungsstege in einer zur ersten Montage- bzw. Demontagerichtung parallelen Richtung derart verschiebbar sind, dass die Haltestege in Überdeckung mit den Führungsstegen angeordnet sind.

Die zueinander in einer zur ersten Montage- bzw. Demontagerichtung parallelen Ebene ortsfest angeordneten Wischblattadapterelemente wird dadurch ermöglicht, dass parallel zu den Führungsstegen Anschlagstege vorgesehen sind, dass der Abstand zwischen den Führungsstegen und den Anschlagstegen der Höhe der Haltestege entspricht, und dass die Anschlagstege zumindest bereichsweise fluchtend zu den Aussparungen angeordnet sind.

Um bei der Montage bzw. Demontage den Bewegungsweg des ersten und des zweiten Wischblattadapterelements zueinander zu begrenzen, ist es in einer weiteren konstruktiven Ausgestaltung der Erfindung vorgesehen, dass das erste Wischblattadapterelement oder das zweite Wischblattadapterelement wenigstens ein Anschlagelement aufweist, das als Bewegungsanschlag für die beiden Wischblattadapterelemente in Richtung der ersten Montage- bzw. Demontagerichtung wirkt.

Zuletzt umfasst die Erfindung eine Wischeinrichtung zum Reinigen einer Fahrzeugscheibe, die aus einem erfindungsgemäßen Wischarm und einem erfindungsgemäßen Wischblatt besteht.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
Fig. 1 die Bestandteile einer erfindungsgemäßen Wischeinrichtung zum Wischen einer Fahrzeugscheibe in einer vereinfachten Darstellung,
Fig. 2 Einen Teilbereich eines erfindungsgemäßen Wischarms und Teile eines erfindungsgemäßen Wischblatts in einer perspektivischen Darstellung,

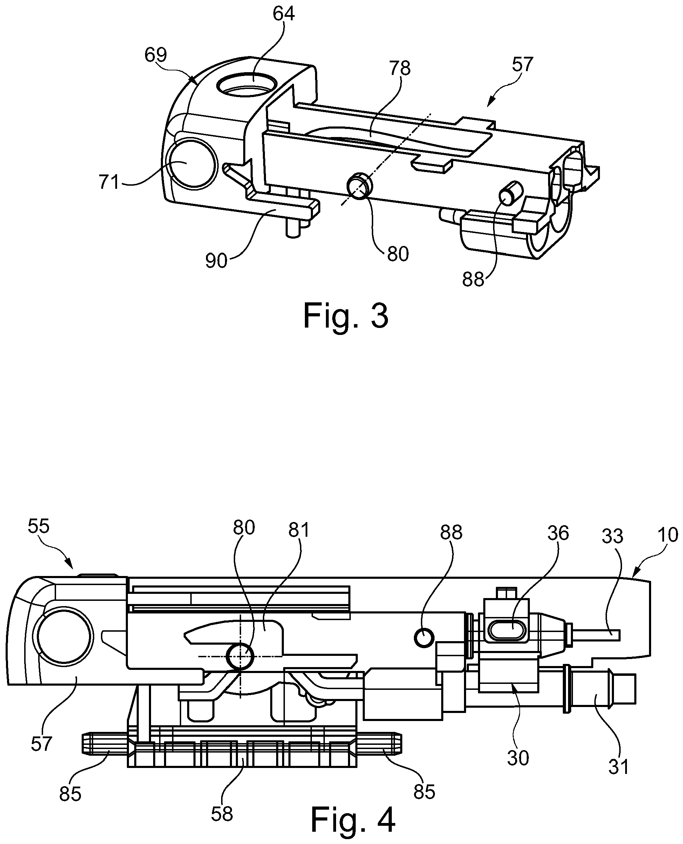

Fig. 3 ein Wischblattadapterelement eines Wischblattadapters in perspektivischer Einzeldarstellung,
Fig. 4 den Befestigungsbereich des Wischblattadapters am Wischarm in einer teilweise geschnittenen Darstellung,
Fig. 5 bis Fig. 8 einen Demontagevorgang eines Wischblatts von einem Wischarm in verschiedenen Phasen, jeweils in Seitenansicht,
Fig. 9 ein Detail des Wischblattadapters in einer geschnittenen Darstellung,
Fig. 10 eine weitere Einzelheit des Wischblattadapters in einer geschnittenen, perspektivischen Darstellung,
Fig. 11 und Fig. 12 einen modifizierten Wischblattadapter in der Betriebsstellung und der Demontagestellung, jeweils in perspektivischer, teilweise geschnittener Darstellung,
Fig. 13 in perspektivischer, teilweise geschnittener Darstellung eine modifizierte Wischeinrichtung,
Fig. 14 einen Querschnitt durch die Wischeinrichtung gemäß Fig. 13,
Fig. 15 zwei Wischblattadapterelemente des Wischblattadapters gemäß Fig. 13 und 14,
Fig. 16a und Fig. 16b die Montagefolge der Wischblattadapterelemente des Wischblattadapters gemäß Fig. 13 im Querschnitt,
Fig. 17 bis Fig. 19 die Montagefolge zweier weiterer modifizierter Wischblattadapterelemente in Seitenansicht und
Fig. 20 bis Fig. 22 den Montagevorgang des modifizierten Wischblattadapters gemäß Fig. 17 bis 19 an einem Wischarm in vereinfachten Längsschnitten.

Gleiche Elemente bzw. Elemente mit gleicher Funktion sind in den Figuren mit den gleichen Bezugsziffern versehen.

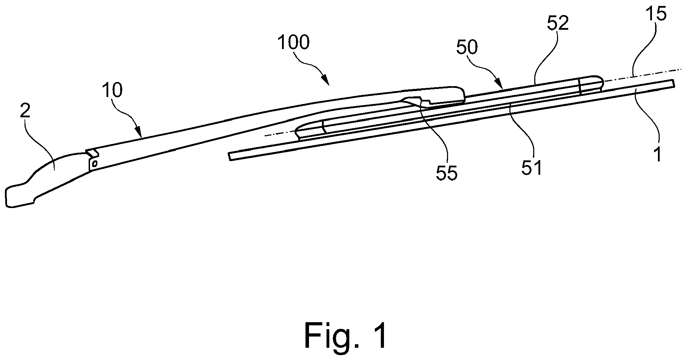

In der Fig. 1 ist eine erfindungsgemäße Wischeinrichtung 100 einer Scheibenwischanlage zum Reinigen einer Fahrzeugscheibe 1 eines Kraftfahrzeugs dargestellt. Die Wischeinrichtung 100 weist einen Wischarm 10 auf, der in einem Wischarmgelenk 2 schwenkbar angeordnet ist, wobei das Wischarmgelenk 2 wiederum mit einem nicht dargestellten Antrieb (Scheibenwischermotor) zumindest mittelbar gekoppelt ist. Neben dem Wischarm 10 umfasst die Wischeinrichtung 100 ein an dem Wischarm 10 austauschbar befestigtes Wischblatt 50. Das Wischblatt 50 weist einen an die Fahrzeugscheibe 1 anlegbaren Wischgummi 51 auf, der an einem langgestreckten Wischblattkörper 52 angeordnet ist. Das Wischblatt 50 bzw. der Wischblattkörper 52 weist an seinen Längsseiten nicht dargestellte Sprühöffnungen zum Aufbringen einer Waschflüssigkeit auf die Fahrzeugscheibe 1 auf. Darüber hinaus ist das Wischblatt 50 als sogenanntes beheizbares Wischblatt ausgebildet, um insbesondere ein Anhaften bzw. Anfrieren des Wischgummis 51 an die Fahrzeugscheibe 1 bei tiefen Temperaturen zu vermeiden. Da sowohl die Ausbildung eines Wischblatts 50 mit entsprechenden Sprühöffnungen, als auch die Ausbildung eines Wischblatts 50 als beheizbares Wischblatt 50, auch in Kombination, an sich bekannt ist, werden diesbezüglich im Folgenden lediglich erfindungswesentliche Einzelheiten erläutert.

Zur Befestigung des Wischblatts 50 an dem Wischarm 10 umfasst das Wischblatt 50 darüber hinaus einen in der Fig. 1 lediglich bereichsweise erkennbaren Wischblattadapter 55, der mit dem Wischblattkörper 52 verbunden ist, und der der austauschbaren Befestigung des Wischblatts 50 am Wischarm 10 dient.

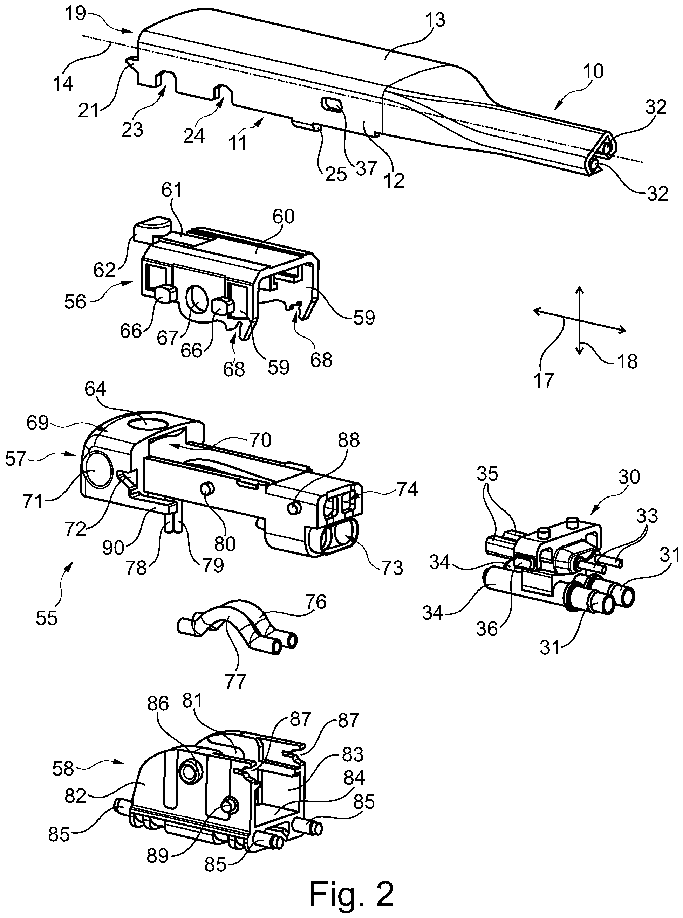

In der Fig. 2 sind Einzelheiten des Wischblattadapters 55 sowie des Wischarms 10 dargestellt. Der aus Blech bestehende Wischarm 10 ist als Stanz-/Biegeteil ausgebildet und weist einen Aufnahmebereich 11 für den Wischblattadapter 55 auf. Im Aufnahmebereich 11 ist der Wischarm 10 mit einem im Wesentlichen U-förmigen Querschnitt ausgestattet. Hierzu sind im Aufnahmebereich 11 zwei parallel zueinander angeordnete Seitenwände 12 und eine die beiden Seitenwände 12 miteinander verbindende Querwand 13 vorgesehen, die die Oberseite des Wischarms 10 im Aufnahmebereich 11 ausbildet. Der langgestreckte Aufnahmebereich 11 weist eine Längsachse 14 auf, die vorzugsweise parallel zur Wischblattlängsachse 15 (Figur 1) verläuft. In der Fig. 2 sind darüber hinaus durch den einen Doppelpfeil eine erste Montage- und Demontagerichtung 17 sowie eine senkrecht dazu angeordnete, durch den anderen Doppelpfeil gekennzeichnete zweite Montage- bzw. Demontagerichtung 18 bezeichnet. Die erste Montage- bzw. Demontagerichtung 17 verläuft dabei parallel bzw. in Ausrichtung mit der Längsachse 14 des Aufnahmebereichs 11.

Der Wischarm 10 weist auf der dem Wischarmgelenk 2 abgewandten Seite eine offene Stirnseite 19 auf. Von den beiden Seitenwänden 12 des Wischarms 10 erstrecken sich in Ausrichtung mit den Seitenwänden 12 an der offenen Stirnseite 19 an jeder Seitenwand 12 ein in etwa dreiecksförmiger Vorsprung 21, dessen Höhe in Richtung zur Stirnseite 19 hin zunimmt. Die beiden Vorsprünge 21 dienen der Fixierung bzw. Positionierung des Wischblattadapters 55 in Richtung der zweiten Montage- bzw. Demontagerichtung 18.

Auf der der Querwand 13 abgewandten Seite der beiden Seitenwände 12 weisen diese jeweils zwei Aufnahmeöffnungen 23, 24 auf, die in Längsrichtung des Wischarms 10 voneinander beabstandet angeordnet sind. Die beiden Aufnahmeöffnungen 23, 24 dienen der Positionierung bzw. Fixierung des Wischblattadapters 55 in Richtung der ersten Montage- bzw. Demontagerichtung 17. Darüber hinaus ist an der der Seitenwand 12 gegenüberliegenden Unterseite der beiden Seitenwände 12 jeweils ein nach innen umgebogener Halteabschnitt 25 vorgesehen, der ebenfalls der Positionierung bzw. Fixierung des Wischblattadapters 55 in Richtung der zweiten Montage- bzw. Demontagerichtung 18 dient.

Innerhalb des Wischarms 10, insbesondere innerhalb des Aufnahmebereichs 11 des Wischarms 10, ist ein der Zuführung der Waschflüssigkeit sowie der Spannungsversorgung dienendes Adapterelement 30 angeordnet. Das aus Kunststoff bestehende, und im Spritzgussverfahren hergestellte Adapterelement 30 weist auf der dem Wischblattadapter 55 abgewandten Seite zwei parallel zueinander angeordnete Zulaufstutzen 31 auf, die mit innerhalb des Wischarms 10 geführten, lediglich in der Fig. 2 dargestellten Versorgungsschläuchen 32 für die Waschflüssigkeit verbunden sind. Oberhalb der beiden Zulaufstutzen 31 erkennt man zwei Leitungen 33 der Spannungsversorgung für das beheizbare Wischblatt 50, wobei die Leitungen 33 auf der dem Wischblattadapter 55 abgewandten Seite ebenfalls innerhalb des Wischarms 10 angeordnet bzw. geführt sind. Auf der den Zulaufstutzen 31 bzw. den Versorgungsleitungen 32 abgewandten Seite weist das Adapterelement 30 jeweils in Ausrichtung mit den Zulaufstutzen 31 bzw. den Versorgungsleitungen 32 ausgerichtete Auslassstutzen 34 sowie pinartige Anschlußstecker 35 auf. An gegenüberliegenden Seitenflächen des Adapterelements 30 weist dieses jeweils einstückig an diesen angeformte, jeweils eine rechteckförmige Form mit gerundeten Seiten aufweisende Befestigungsfortsätze 36 auf. Die Befestigungsfortsätze 36 greifen formschlüssig bzw. mit geringem Spiel in in den Seitenwänden 12 des Wischarms 10 als Durchbrüche ausgebildete Aufnahmeöffnungen 37 ein und positionieren bzw. Fixieren das Adapterelement 30 innerhalb des Aufnahmebereichs 11 des Wischarms 10.

Der Wischblattadapter 55 besteht aus drei miteinander zusammenwirkenden bzw. verbundenen Wischblattadapterelementen 56 bis 58. Das erste Wischblattadapterelement 56 weist einen U-förmigen Querschnitt mit zwei Seitenwänden 59 und einer Oberseite 60 auf. An der Oberseite 60 ist über eine Federzunge 61 ein Rastknopf 62 angeformt, der zusammen mit einer Aufnahmeöffnung 64 am zweiten Wischblattadapterelement 57 eine Rastverbindung 65 ausbildet. An den beiden Seitenwänden 59 sind jeweils nach außen ragende Erhebungen 66 ausgebildet, deren Form und Anordnung den Aufnahmeöffnungen 23, 24 am Wischarm 10 angepasst ist, derart, dass das erste Wischblattadapterelement 56 über die Erhebungen 66 in den Aufnahmeöffnungen 23, 24 im Wischarm 10 positionierbar ist. Darüber hinaus ist in den Seitenwänden 59 des ersten Wischblattadapterelementes 56 jeweils eine Durchgangsöffnung 67 ausgebildet. Auf der der Oberseite 60 abgewandten Unterseite der Seitenwände 59 weisen diese jeweils zusätzlich eine weitere Öffnung 68 als Bestandteil einer weiteren Rastverbindung auf.

Das zweite Wischblattadapterelement 57 weist bei an dem Wischarm 10 montiertem Wischblatt 50 bzw. Wischblattadapter 55 einen über die Stirnseite 19 des Wischarms 10 hinausragenden Abschnitt 69 auf, in dem auch die Aufnahmeöffnung 64 ausgebildet ist. Die Aufnahmeöffnung 64 ist auf der dem Wischarm 10 zugewandten Seite mit einer Einführöffnung 70 für den Rastknopf 62 verbunden. An einander gegenüberliegenden Seitenflächen des Abschnitts 69 weist dieser darüber hinaus Eindellungen 71 auf, über die ein Bediener den Wischblattadapter 55 am zweiten Wischblattadapterelement 57 manuell greifen kann und insbesondere das Wischblatt 50 bzw. den Wischblattadapter 55 in Richtung der ersten Montage- bzw. Demontagerichtung 17 bewegen kann. An den beiden Seitenflächen des Abschnitts 69 weist dieser weiterhin zwei Öffnungen 72 auf, deren Form den Vorsprüngen 21 am Wischarm 10 angepasst ist und mit diesen zusammenwirken.

Auf der dem Abschnitt 69 gegenüberliegenden Seite weist das zweite Wischblattadapterelement 57 einen Einlaufstutzen 73 mit zwei Öffnungen für die beiden Zulaufstutzen 31 des Adapterelements 30 auf. Oberhalb des Einlaufstutzens 73 ist ein buchsenförmiger Steckeranschlusskörper 74 angeordnet, der mit den beiden Anschlusssteckern 35 des Adapterelements 30 zusammenwirkt. Die Öffnungen des Einlaufstutzens 73 und die Aufnahmen für die Anschlußstecker 35 im Steckeranschlusskörper 74 sind mit den Auslassstutzen 34 und den Anschlusssteckern 35 ausgerichtet. Innerhalb des zweiten Wischblattadapterelements 57 ist der Einlaufstutzen 73 mit zwei Zuführleitungen 76, 77 verbunden, die Waschflüssigkeit, getrennt für jede Längsseite des Wischblattkörpers 52, zu in den Figuren nicht dargestellten Einlassöffnungen am dritten Wischblattadapterelement 58 führt. Ebenso sind in dem Steckeranschlusskörper 74 zwei der Stromführung dienende Verbindungsleitungen 78, 79 angeordnet, die der Zuführung des Stroms zum dritten Wischblattadapterelement 58 dienen. An gegenüberliegenden Seitenflächen des zweiten Wischblattadapterelements 57 weist dieses jeweils einen an dem zweiten Wischblattadapterelement 57 angeformten Fortsatz 80 auf, der in am dritten Wischblattadapterelement 58 ausgebildete Führungsschlitze 81 eingreift. Das zweite Wischblattadapterelement 57 ist in dem U-förmigen Querschnitt des ersten Wischblattadapterelements 56 bereichsweise aufgenommen.

Das dritte Wischblattadapterelement 58, das unmittelbar mit dem Wischblattkörper 52 verbunden ist, weist ebenfalls einen U-förmigen Querschnitt mit zwei Seitenwänden 82, 83 und einem Bodenbereich 84 auf, der die beiden Seitenwände 82, 83 miteinander verbindet. Am Bodenbereich 84 sind in Ausrichtung mit den im Wischblattkörper 52 ausgebildeten Waschflüssigkeitskanälen, die zu den Sprühöffnungen am Wischblattkörper 52 führen, insgesamt vier Auslassstutzen 85 für die Waschflüssigkeit angeordnet. An einander abgewandten Außenflächen der Seitenwände 82, 83 weisen diese jeweils einen im Querschnitt kreisförmigen Fortsatz 86 auf, in die bei montiertem Wischblattadapter 55 die Aufnahmeöffnungen 64 des ersten Wischblattadapterelements 56 formschlüssig eingreifen, so dass die Fortsätze 86 zusammen mit den Durchgangsöffnungen 67 eine Drehachse ausbilden, um die die beiden Wischblattadapterelemente 56 und 58 schwenkbar zueinander gelagert sind. Auf der dem Adapterelement 30 zugewandten Seite sind auf der dem Bodenbereich 84 abgewandten Seite der beiden Seitenwände 82, 83 darüber hinaus Rastöffnungen 87 ausgebildet, die am zweiten Wischblattadapterelement 57 ausgebildeten Fortsätzen 88 zusammenwirken. Weitere Fortsätze 89 an den Seitenwänden 82, 83 wirken mit den Öffnungen 68 am ersten Wischblattadapterelement 56 zusammen.

Im montierten Zustand des Wischblatts 50 bzw. des Wischblattadapters 55 im Aufnahmebereich 11 des Wischarms 10 ist das erste Wischblattadapterelement 56 über die Erhebungen 66 und die Aufnahmeöffnungen 22, 24 starr in Bezug auf die erste Montage- bzw. Demontagerichtung 17 im Wischarm 10 angeordnet. Weiterhin ist das dritte Wischblattadapterelement 58 und somit auch der Wischblattkörper 52 in gewünschter Art und Weise schwenkbar zum ersten Wischblattadapterelement 56 angeordnet, um während des Betriebs der Wischeinrichtung 100 eine stetige Anlage des Wischgummis 51 an der Fahrzeugscheibe 1 zu ermöglichen.

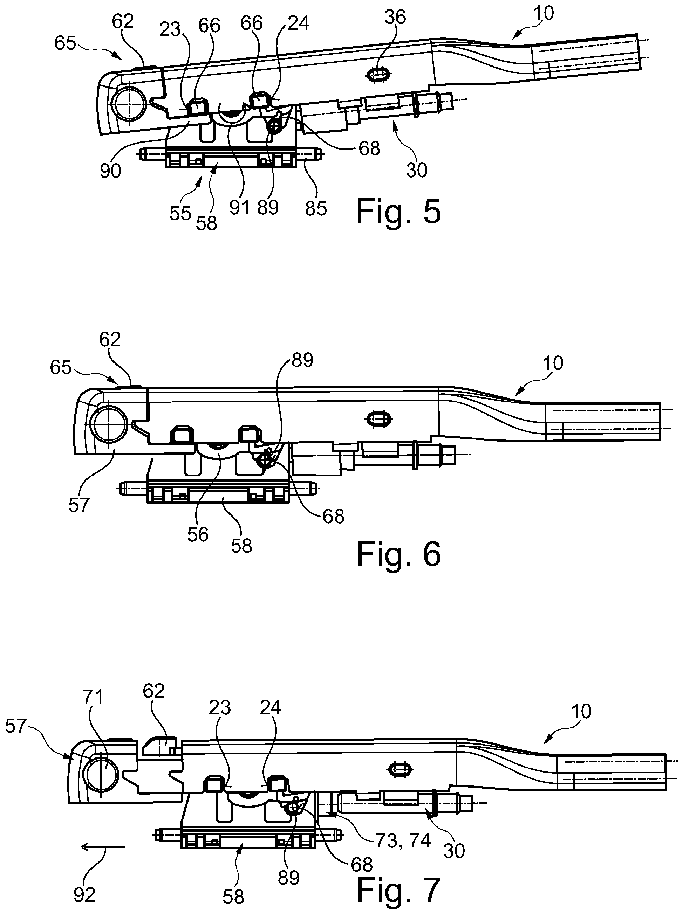

Ein Lösen des ersten Wischblattadapterelements 56 aus den Aufnahmeöffnungen 23, 24 wird dadurch verhindert, dass das zweite Wischblattadapterelement 57 von den Halteabschnitten 25 des Wischarms 10 bereichsweise umgriffen ist und zusätzlich an dem zweiten Wischblattadapterelement 57 einstückig angeformte Verlängerungen 90 entsprechend der Darstellung der Fig. 2 und 5 die einen Aufnahmeöffnungen 23 überdecken bzw. verschließen. Weiterhin ragen die Vorsprünge 21 des Wischarms 10 in die Öffnungen 72 am zweiten Wischblattadapterelement 57 ein. Dadurch, dass zwischen dem ersten Wischblattadapterelement 56 und dem zweiten Wischblattadapterelement 57 die Rastverbindung 65 ausgebildet ist, wird darüber hinaus, ohne ein Eindrücken des Rastknopfs 62, eine Bewegung des zweiten Wischblattadapterelements 57 in Richtung der ersten Montage- bzw. Demontagerichtung 17 verhindert.

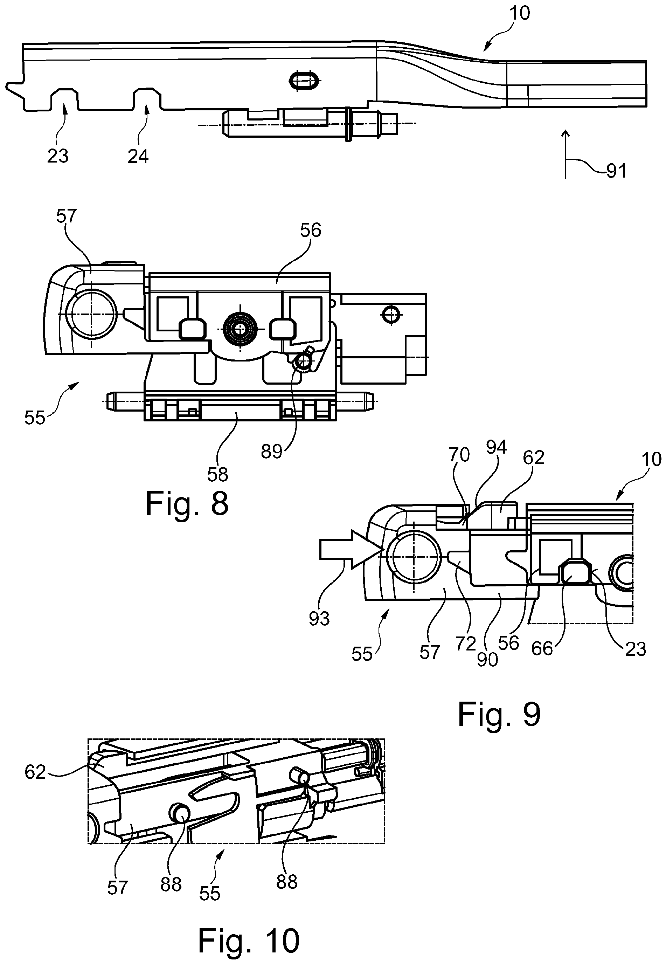

Die Demontage des Wischblatts 50 bzw. des Wischblattadapterelements 55 von dem Wischarm 10 wird nunmehr anhand der Fig. 5 bis 8 wie folgt beschrieben: Entsprechend der Fig. 5 wird in einem ersten Schritt das dritte Wischblattadapterelement 58 durch eine Drehung in Richtung des Pfeils 91 im Gegenuhrzeigersinn zum Wischarm 10 ausgerichtet. Dieser Zustand ist in der Fig. 6 in der Endposition dargestellt. Dabei greifen die Fortsätze 89 unter Bildung einer Rastverbindung in die Öffnungen 68 ein. Anschließend wird entsprechend der Fig. 7 der Rastknopf 62 in die Aufnahmeöffnung 64 eingedrückt und das zweite Wischblattadapterelement 57 entsprechend des Pfeils 92 aus dem Aufnahmebereich 11 des Wischarms 10 herausgezogen. Dadurch wird auch der Einlaufstutzen 73 und der Steckeranschlusskörper 74 aus dem Adapterelement 30 herausgezogen. Gleichzeitig werden die Aufnahmeöffnungen 23, 24 durch die Verlängerungen 90 freigegeben, so dass anschließend entsprechend der Fig. 8 durch eine Relativbewegung zwischen dem Wischblattadapter 55 und dem Wischarm 10 in Richtung des Pfeils 91 ein Trennen des Wischblatts 50 vom Wischarm 10 ermöglicht wird.

Die Montage des Wischblatts 50 bzw. des Wischblattadapters 55 erfolgt in analoger Weise in umgekehrter Reihenfolge.

In der Fig. 9 ist der Zustand dargestellt, bei der der Wischblattadapter 55 mit den Erhebungen 66 bereits in die Aufnahmeöffnungen 23, 24 des Wischarms 10 eingeführt ist. Bei dem nachfolgenden Einschieben des zweiten Wischblattadapterelements 57 in Richtung des Pfeils 93 wird durch eine entsprechende Dimensionierung der Verlängerungen 90 gewährleistet, dass das erste Wischblattadapterelement 56 derart mit dem zweiten Wischblattadapterelement 57 ausgerichtet ist, dass ein Einführen des Rastknopfes 62 in die Einführöffnung 70 nur bei einer entsprechenden Ausrichtung der beiden Wischblattadapterelemente 56, 57 ermöglicht wird. Insbesondere wird bewirkt, dass der Rastknopf 62 mit seiner Schräge 94 in die Einführöffnung 70 eingeführt werden kann, ohne dass es zu einem Blockieren zwischen dem Rastknopf 62 und der Einführöffnung 70 kommen kann, die beispielsweise zu einer Beschädigung bzw. zu einem Abbrechen des Rastknopfes 62 bzw. der Federzunge 61 führen könnte.

In der Fig. 10 ist der Zustand des Wischblattadapters 55 entsprechend der Fig. 7 nochmals im Detail dargestellt. Insbesondere erkennt man, dass durch an den Seitenflächen des zweiten Wischblattadapterelements 57 angeformte, rechteckförmige Vorsprünge 95 (Fig. 2) in Verbindung mit den Führungsschlitzen 81 eine Schwenkbewegung des zweiten Wischblattadapterelements 57 verhindert ist.

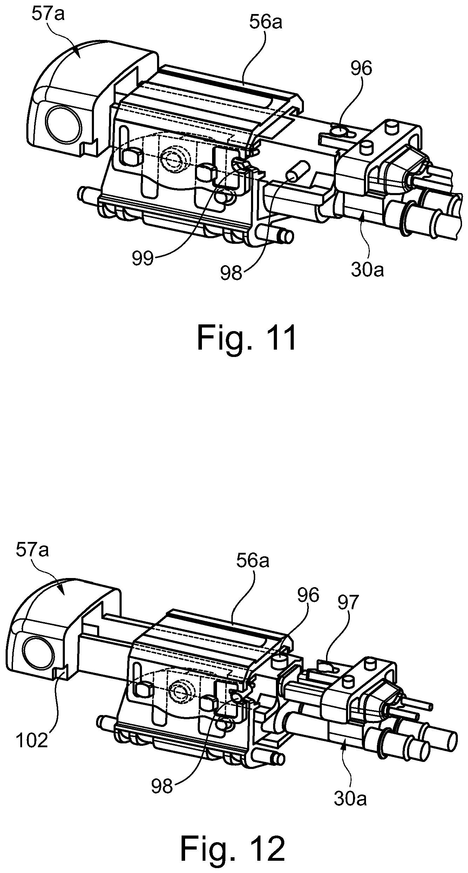

In den Fig. 11 und 12 ist eine abgewandelte Ausführungsform der Erfindung dargestellt, bei der das zweite Wischblattadapterelement 57a auf seiner Oberseite auf der dem Adapterelement 30a zugewandten Seite einen im Querschnitt zylindrischen Fortsatz 96 aufweist, der zum Ausbilden einer Rastverbindung mit einer Rastöffnung 97 zusammenwirkt, die am Adapterelement 30a angeformt ist. Darüber hinaus erkennt man an der einen Seitenwand des zweiten Wischblattadapterelements 57a noch einen zylindrisch ausgebildeten Fortsatz 98, der mit einer am ersten Wischblattadapterelement 56a ausgebildeten Öffnung 99 zusammenwirkt und in der in der Fig. 12 dargestellten Demontagestellung des zweiten Wischblattadapterelements 57a eine Schwenkbarkeit des Wischarms 10 zum zweiten Wischblattadapterelement 57a gewährleistet. Darüber hinaus ist an dem zweiten Wischblattadapterelement 57a erkennbar, dass dieses auf der dem ersten Wischblattadapterelement 56a zugewandten Seite in einem unteren Bereich eine Aussparung 102 aufweist. Die Aussparung 102 wirkt mit einem entsprechend geformten, nicht dargestellten Vorsprung an der ihr zugewandten Stirnseite des ebenfalls nicht dargestellten Wischarms 10 in Analogie zu dem Vorsprung 21 bei dem Wischarm gemäß Fig. 2 zusammen, derart, dass die Aussparung 102, zusammen mit den Halteabschnitten 25 des Wischarms 10 der Fixierung des Wischblattadapters 55 in dem Wischarm 10 dient. Das zweite Wischblattadapterelement 57a weist somit, im Gegensatz zum Wischblattadapterelement 57, keine Verlängerungen 90 auf, die im Verriegelungszustand des zweiten Wischblattadapterelements 57a das erste Wischblattadapterelement 56a bzw. dessen Erhebungen 66 in den Aufnahmeöffnungen 23, 24 des Wischarms 10 hält.

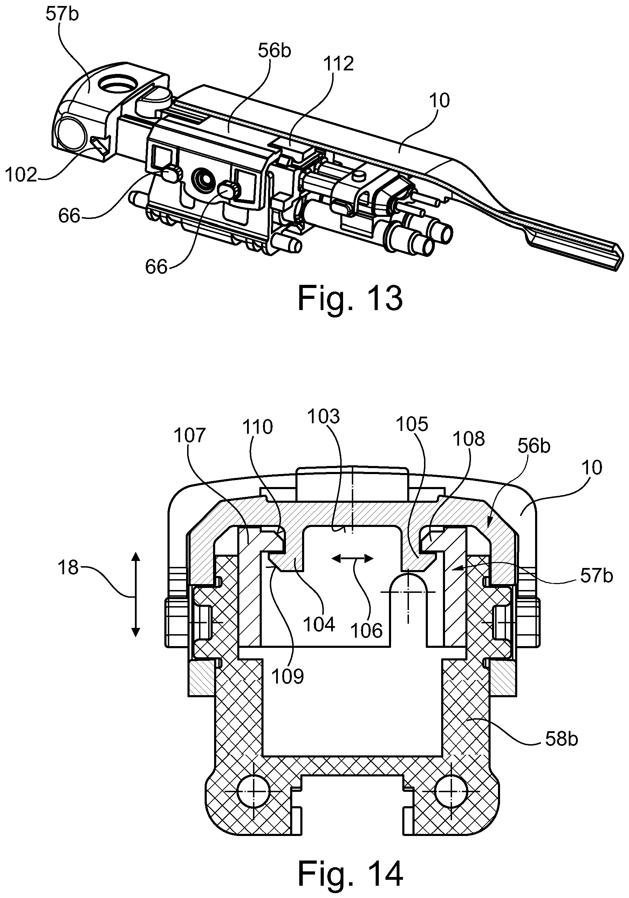

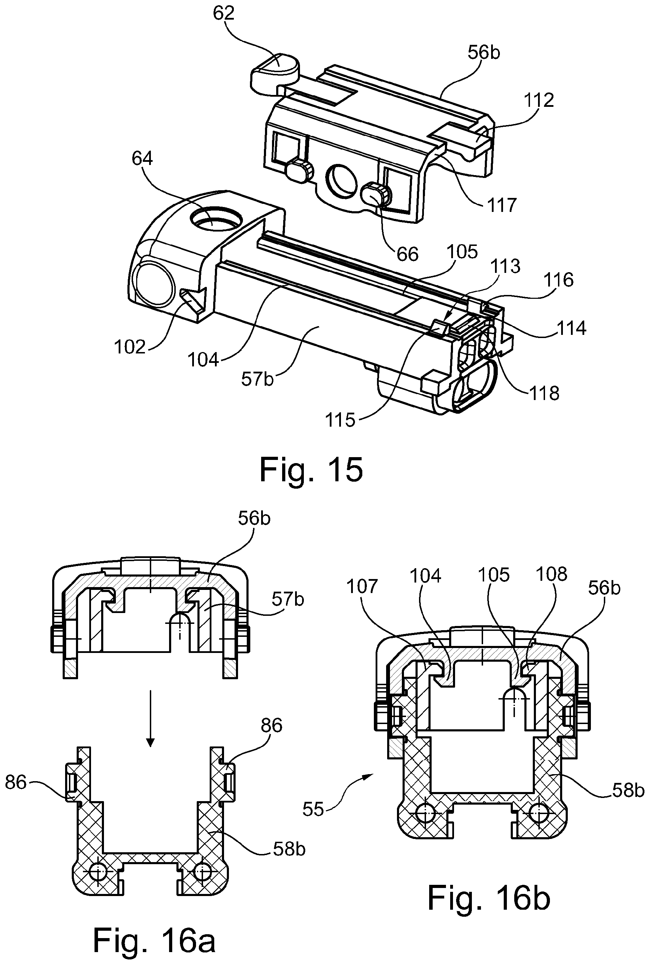

In den Fig. 13 bis 16 ist ein weiteres Ausführungsbeispiel der Erfindung dargestellt. Man erkennt in Analogie zu den Fig. 11 und 12 die an dem zweiten Wischblattadapterelement 57b ausgebildete Aussparung 102, die mit dem am Wischarm 10 ausgebildeten Vorsprung 21 zusammenwirkt. Wie insbesondere anhand einer Zusammenschau der Fig. 14 und 16 erkennbar ist, sind das erste Wischblattadapterelement 56b und das zweite Wischblattadapterelement 57b über eine Formschlussverbindung in Richtung der zweiten Montage- bzw. Demontagerichtung 18 zueinander positioniert. Hierzu weist das erste Wischblattadapterelement 56b innerhalb seines U-förmigen Querschnitts senkrecht von dessen Unterseite 103 wegragende Rasthakenelemente 104, 105 auf, die in Richtung des Doppelpfeils 106 um ein gewisses Maß elastisch schwenkbar angeordnet sind. Die Rasthakenelemente 104, 105 wirken mit an dem zweiten Wischblattadapterelement 57b ausgebildeten Führungen 107, 108 zusammen. Wesentlich ist auch, dass die Rasthakenelemente 104, 105 sowie die Führungen 107, 108 jeweils schräge Anlaufflächen 109, 110 aufweisen, die bei einer Montage der beiden Wischblattadapterelemente 56b, 57b ein Schwenken der Rasthakenelemente 104, 105 in die eine Richtung des Doppelpfeils 106 ermöglichen. In der in der Fig. 14 dargestellten montierten Stellung hintergreifen die Rasthakenelemente 104, 105 die Führungen 107, 108, so dass die beiden Wischblattadapterelemente 56b, 57b in Richtung der zweiten Montage- bzw. Demontagerichtung 18 zueinander positioniert bzw. fixiert sind.

Wie darüber hinaus anhand der Fig. 13 und 15 erkennbar ist, weist das erste Wischblattadapterelement 56b auf der dem Rastknopf 62 abgewandten Seite einen Rasthaken 112 auf, der mit einem an der Oberseite 113 des zweiten Wischblattadapterelements 57b ausgebildeten Vorsprung 114 zusammenwirkt. Darüber hinaus sind seitlich neben dem Vorsprung 114 zwei weitere Vorsprünge 115, 116 erkennbar, die als Anschlagelemente für die Stirnfläche 117 des zweiten Wischblattadapterelements 57b wirken. Der Vorsprung 114 weist zumindest auf der dem Rastknopf 62 abgewandten Seite eine Schräge 118 auf, so dass das erste Wischblattadapterelement 56b mit seinem Rastknopf 62 durch Einschieben des zweiten Wischblattadapterelements 57b in Richtung des Wischarms 10 mit seinem Rastknopf 62 in Wirkverbindung mit der Aufnahmeöffnung 64 gebracht werden kann, wobei der Rasthaken 112 den Vorsprung 114 überfährt.

Zur Montage des Wischblattadapters 55 werden entsprechend der Fig. 16a zunächst die beiden Wischblattadapterelemente 56b, 57b mittels der Rasthakenelemente 104, 105 und der Führungen 107, 108 miteinander verbunden. Anschließend erfolgt entsprechend der Fig. 16a eine Relativbewegung zu dem dritten Wischblattadapterelement 58b, so dass die am dritten Wischblattadapterelement 58b ausgebildeten Fortsätze 86 in die an dem ersten Wischblattadapterelement 56b ausgebildeten Aufnahmen eingreifen, wodurch das dritte Wischblattadapterelement 58b zu den beiden Wischblattadapterelementen 56b, 57 schwenkbar angeordnet ist.

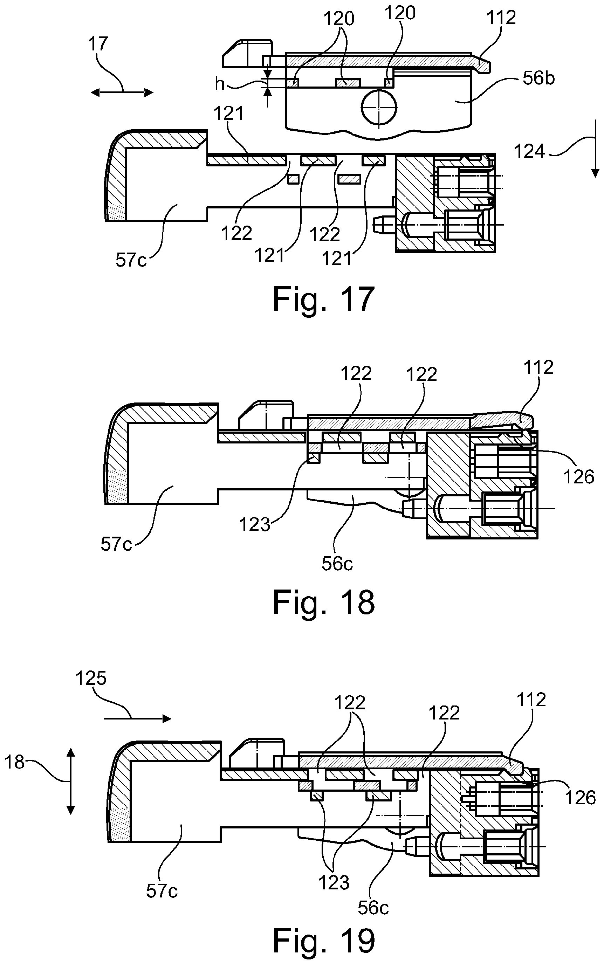

In den Fig. 17 bis 22 ist eine nochmals abgewandelte Ausführungsform der Erfindung dargestellt. Bei dieser Ausführungsform sind an dem ersten Wischblattadapterelement 56c an seinen beiden gegenüberliegenden Seitenflächen jeweils Führungsstege 120 mit der Höhe h ausgebildet. Im dargestellten Ausführungsbeispiel weist das erste Wischblattadapterelement 56c an seinen beiden Seitenflächen jeweils drei, voneinander beabstandet angeordnete Haltestege 120 auf, die eine unterschiedliche Länge aufweisen können. Die Haltestege 120 sind dabei parallel zur ersten Montage- bzw. Demontagerichtung 17 in der gleichen Höhe angeordnet. An dem zweiten Wischblattadapterelement 57c sind an den einander gegenüberliegenden Seitenflächen jeweils Führungsstege 121 mit Aussparungen 122 ausgebildet, wobei die Länge der Aussparungen 122 sowie deren Anordnung an den Führungsstegen 121 der Länge sowie der Anordnung der Haltestege 120 an dem ersten Wischblattadapterelement 56c angepasst ist. Unterhalb der Führungsstege 121 sind in Ausrichtung mit den Aussparungen 122 zwei Anschlagstege 123 angeordnet. Der Abstand zwischen den Anschlagstegen 123 und den Führungsstegen 121 entspricht der Höhe h der Haltestege 120. Zur Montage der beiden Wischblattadapterelemente 56c, 57c werden diese in Richtung des Pfeils 124 relativ zueinander bewegt, derart, dass die Haltestege 120 entsprechend der Fig. 18 in die Aussparungen 122 eingeführt werden, bis diese an den Anschlagstegen 123 anliegen. Anschließend findet entsprechend der Fig. 19 eine Relativbewegung der beiden Wischblattadapterelemente 56c, 57c in Richtung des Pfeils 125 statt, wodurch der Rasthaken 112 in eine am zweiten Wischblattadapterelement 57c an dessen Oberseite ausgebildete Aussparung 126 gelangt. In dieser Position sind die Haltestege 120 zwischen den Führungsstegen 121 und den Anschlagstegen 123 angeordnet und außerhalb der Aussparung 122, so dass die beiden Wischblattadapterelemente 56c, 57c in Richtung der zweiten Montage- bzw. Demontagerichtung 18 zueinander positioniert bzw. fixiert sind.

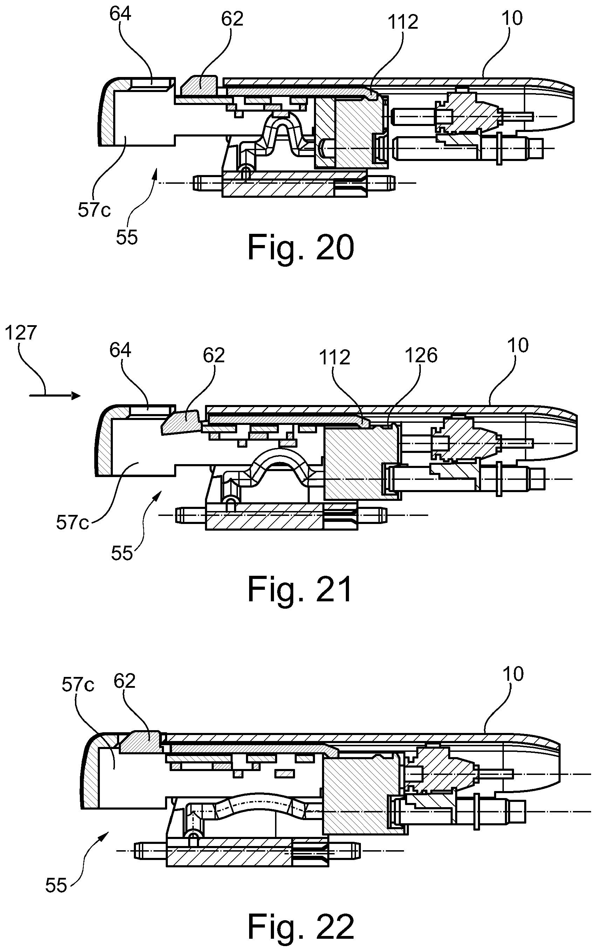

Zur Montage des Wischblattadapters 55 an dem Wischarm 10 wird entsprechend der Figurenfolge der Fig. 20 bis 22 zunächst der Rastknopf 62 nach unten gedrückt bzw. das zweite Wischblattadapterelement 57c in Richtung des Pfeils 127 in Richtung zum Wischarm 10 bewegt. Dabei gelangt der Rasthaken 112 außerhalb der Aussparung 126. In der Fig. 22 ist der Endzustand dargestellt, bei der der Rastknopf 62 in der Aufnahmeöffnung 64 des zweiten Wischblattadapterelements 57c angeordnet ist.

### Bezugszeichenliste

- 1: Fahrzeugscheibe
- 2: Wischarmgelenk
- 10: Wischarm
- 11: Aufnahmebereich
- 12: Seitenwand
- 13: Querwand
- 14: Längsachse
- 15: Wischblattlängsachse
- 17: erste Montage- bzw. Demontagerichtung
- 18: zweite Montage- bzw. Demontagerichtung
- 19: Stirnseite
- 21: Vorsprung
- 23: Aufnahmeöffnung
- 24: Aufnahmeöffnung
- 25: Halteabschnitt
- 30, 30a: Adapterelement
- 31: Zulaufstutzen
- 32: Versorgungsschlauch
- 33: Leitung
- 34: Auslassstutzen
- 35: Anschlussstecker
- 36: Befestigungsfortsatz
- 37: Aufnahmeöffnung

- 50: Wischblatt
- 51: Wischgummi
- 52: Wischblattkörper
- 55: Wischblattadapter
- 56, 56a, 56b, 56c: erstes Wischblattadapterelement
- 57, 57a, 57b, 57c: zweites Wischblattadapterelement
- 58, 58b: drittes Wischblattadapterelement
- 59: Seitenwand
- 60: Oberseite
- 61: Federzunge
- 62: Rastknopf
- 64: Aufnahmeöffnung
- 65: Rastverbindung
- 66: Erhebung
- 67: Durchgangsöffnung
- 68: Öffnung
- 69: Abschnitt
- 70: Einführöffnung
- 71: Eindellung
- 72: Öffnung
- 73: Einlaufstutzen
- 74: Steckeranschlusskörper
- 76: Zuführleitung
- 77: Zuführleitung
- 78: Verbindungsleitung
- 79: Verbindungsleitung
- 80: Fortsatz
- 81: Führungsschlitze
- 82: Seitenwand
- 83: Seitenwand
- 84: Bodenbereich
- 85: Auslassstutzen
- 86: Fortsatz
- 87: Rastöffnung
- 88: Fortsatz
- 89: Fortsatz
- 90: Verlängerung
- 91: Pfeil
- 92: Pfeil
- 93: Pfeil
- 94: Schräge
- 95: Vorsprung
- 96: Fortsatz
- 97: Rastöffnung
- 98: Fortsatz
- 99: Öffnung

- 100: Wischeinrichtung
- 102: Aussparung
- 103: Unterseite
- 104: Rasthakenelement
- 105: Rasthakenelement
- 106: Doppelpfeil
- 107: Führung
- 108: Führung
- 109: Anlauffläche
- 110: Anlauffläche
- 112: Rasthaken
- 113: Oberseite
- 114: Vorsprung
- 115: Vorsprung
- 116: Vorsprung
- 117: Stirnfläche
- 118: Schräge
- 120: Haltesteg
- 121: Führungssteg
- 122: Aussparung
- 123: Anschlagsteg
- 124: Pfeil
- 125: Pfeil
- 126: Aussparung
- 127: Pfeil

- h: Höhe

## Patentansprüche

1. Wischarm (10) für eine Scheibenwischanlage eines Kraftfahrzeugs, mit einem Aufnahmebereich (11) für einen Wischblattadapter (55), wobei im Aufnahmebereich (11) ein der Zuführung von Waschflüssigkeit dienendes Adapterelement (30; 30a) angeordnet ist, wobei das Adapterelement (30; 30a) einerseits mit einer Versorgungsleitung (32) für die Waschflüssigkeit verbindbar ist und andererseits wenigstens einen Auslass (34) für die Waschflüssigkeit aufweist, der mit dem Wischblattadapter (55) verbindbar ist, wobei der wenigstens eine Auslass (34) mit einer ersten Montage- bzw. Demontagerichtung (17) des Wischblattadapters (55) ausgerichtet ist, wobei der wenigstens eine Auslass (34) zumindest annähernd in Richtung der Längsachse (14) des Wischarms (10) im Aufnahmebereich (11) verläuft, und wobei der Aufnahmebereich (11) dazu ausgebildet ist, eine Montage bzw. Demontage des Wischblattadapters (55) durch zwei erforderliche Bewegungen am Wischblattadapter in unterschiedliche Montage- bzw. Demontagerichtungen (17, 18) zu ermöglichen, wobei der Aufnahmebereich (11) einen U-förmigen Querschnitt mit zwei zueinander parallelen Seitenwänden (12) und einer die beiden Seitenwände (12) verbindenden Querwand (13) aufweist, **dadurch gekennzeichnet, dass** der Aufnahmebereich mit wenigstens zwei, an den Seitenwänden (12) ausgebildeten Aufnahmeöffnungen (23, 24) zur Aufnahme von am Wischblattadapter (55) angeordneten Erhebungen (66) in der zweiten Montage- bzw. Demontagerichtung (18) versehen ist, wobei die Aufnahmeöffnungen (23, 24) zumindest im wesentlichen senkrecht zur Querwand (13) verlaufen, wobei das Adapterelement (30; 30a) auf der der Seitenwand (12) zugewandten Seite jeweils einen Befestigungsfortsatz (36) aufweist, der in eine einen geschlossenen Querschnitt aufweisende Aufnahmeöffnung (37) der Seitenwand (12) hineinragt, und wobei die Querschnitte der Aufnahmeöffnung (37) und des Befestigungsfortsatzes (36) so aufeinander abgestimmt sind, dass das Adapterelement (30; 30a) in der Aufnahmeöffnung (37) zumindest im Wesentlichen ortsfest angeordnet ist.

2. Wischarm nach Anspruch 1,
**dadurch gekennzeichnet,**
**dass** das Adapterelement (30; 30a) zusätzlich der Stromzuführung eines eine Heizeinrichtung aufweisenden Wischblatts (50) mittels des Wischblattadapters (55) ausgebildet ist.

3. Wischarm nach Anspruch 2,
**dadurch gekennzeichnet,**
**dass** die auf der dem Adapterelement (30; 30a) zugewandten Seite des Wischblattadapters (55) angeordneten, der Stromzuführung dienenden Stromführungselemente (35) parallel zu dem wenigstens einen Auslass (34) angeordnet sind.

4. Wischarm nach einem der Ansprüche 1 bis 3,
**dadurch gekennzeichnet,**
**dass** an den Seitenwänden (12) im Bereich einer offenen Stirnseite (19) des Aufnahmebereichs (11) von der Stirnseite (19) wegragende, und mit den Seitenwänden (12) ausgerichtete Vorsprünge (21) vorgesehen sind, die dazu ausgebildet sind, den Wischblattadapter (55) in seiner Betriebsstellung in einer senkrecht zur ersten Montage- bzw. Demontagerichtung (17) verlaufenden Richtung in dem Aufnahmebereich (11) zu halten.

5. Wischblatt (50), zur Befestigung an einem Wischarm (10) nach einem der nach Ansprüche 1 bis 4 mit einem Wischblattadapter (55),
der dazu ausgebildet ist, in einem Wischarm (10) aufgenommen zu werden,
wobei an dem Wischblattadapter (55) wenigstens ein Einlass (73) zur Zuführung einer Waschflüssigkeit angeordnet ist, wobei der wenigstens eine Einlass (73) parallel zu einer ersten Montage- bzw. Demontagerichtung (17) des Wischblattadapters (55) ausgerichtet ist, wobei der Wischblattadapter (55) aus wenigstens zwei Wischblattadapterelementen (56; 56a; 56b; 56c, 57; 57a; 57b; 57c, 58; 58b) besteht, und wobei die wenigstens zwei Wischblattadapterelemente (56; 56a; 56b; 56c, 57; 57a; 57b; 57c, 58; 58b) dazu ausgebildet sind, in einer im Wesentlichen senkrecht zur ersten Montage- bzw. Demontagerichtung (17) angeordneten zweiten Montage- bzw. Demontagerichtung (18) in dem Wischarm (10) aufgenommen zu werden,
**dadurch gekennzeichnet,**
**dass** an einem ersten Wischblattadapterelement (56; 56a) des Wischblattadapters (55) an dessen Seitenwänden Erhebungen (66) zum Einführen in Aufnahmeöffnungen (23, 24) des Wischarms (10) ausgebildet sind, und dass zumindest einige der Erhebungen (66) von dem zweiten Wischblattadapterelement (57; 57a) in der Betriebsstellung des Wischblatts (50) in den Aufnahmeöffnungen (23, 24) des Wischarms blockiert sind.

6. Wischblatt nach Anspruch 5,
**dadurch gekennzeichnet,**
**dass** zwischen zwei der Wischblattadapterelemente (56, 57) eine Rastverbindung (65) ausgebildet ist, die die beiden Wischblattadapterelemente (56, 57) in Richtung der ersten Montage- bzw. Demontagerichtung (17) zueinander fixiert.

7. Wischblatt nach Anspruch 5,
**dadurch gekennzeichnet,**
**dass** zwischen dem zweiten Wischblattadapterelement (57a) und dem Adapterelement (30a) eine Rastverbindung ausgebildet ist, die das zweite Wischblattadapterelement (57a) in Richtung der ersten Montage- bzw. Demontagerichtung (17) fixiert.

8. Wischblatt nach einem der Ansprüche 5 bis 7,
**dadurch gekennzeichnet,**
**dass** in dem zweiten Wischblattadapterelement (57; 57a) Öffnungen (72) zur Aufnahme von am Wischarm (10) ausgebildeten Vorsprüngen (21) vorgesehen sind, die dazu ausgebildet sind, den Wischblattadapter (55) in seiner Betriebsstellung in einer senkrecht zur ersten Montage- bzw. Demontagerichtung (17) verlaufenden Richtung zu halten.

9. Wischblatt nach einem der Ansprüche 5 bis 8,
**dadurch gekennzeichnet,**
**dass** der Wischblattadapter (55) ein drittes Wischblattadapterelement (58; 58b) umfasst, das unmittelbar mit einem Wischblattkörper (52) des Wischblatts (50) verbunden ist, und dass das erste und das dritte Wischblattadapterelement (56; 56a, 58; 58b) schwenkbar zueinander angeordnet sind.

10. Wischblatt nach Anspruch 9,
**dadurch gekennzeichnet,**
**dass** das dritte Wischblattadapterelement (58) eine U-förmigen Querschnitt aufweist, in dem das zweite Wischblattadapterelement (57; 57a) zumindest bereichsweise aufgenommen ist, und dass das erste Wischblattadapterelement (56; 56a) einen U-förmigen Querschnitt aufweist, der das zweite Wischblattadapterelement (57; 57a) bereichseise aufnimmt und das dritte Wischblattadapterelement (58) im Bereich dessen Seitenwänden umgreift.

11. Wischblatt nach Anspruch 9 oder 10,
**dadurch gekennzeichnet,**
**dass** das zweite Wischblattadapterelement (57; 57a) Fortsätze (80) aufweist, die in Führungsschlitze (81) des dritten Wischblattadapterelements (58) schenk- und verschiebbar angeordnet sind.

12. Wischblatt nach einem der Ansprüche 5 bis 11,
**dadurch gekennzeichnet,**
**dass** das erste Wischblattadapterelement (56b; 56c) und das zweite Wischblattadapterelement (57b; 57c) durch eine Formschlussverbindung in Richtung der zweiten Montage- bzw. Demontagerichtung (18) zueinander positioniert sind.

13. Wischblatt nach Anspruch 12,
**dadurch gekennzeichnet,**
**dass** die Formschlussverbindung an einem der Wischblattadapterelemente (56b, 57b) ausgebildete Rasthakenelemente (104, 105) umfasst, die am anderen der Wischblattadapterelemente (57b, 56b) ausgebildete Führungen (107, 108) umgreifen, und dass die Rasthakenelemente (104, 105) derart ausgebildet sind, dass durch eine Relativbewegung der beiden Wischblattadapterelemente (56b, 57b) in Richtung der zweiten Montage- bzw. Demontagerichtung (18) die Rasthakenelemente (104, 105) die Führungen (107, 108) umgreifen und dabei verrasten.

14. Wischblatt nach Anspruch 12,
**dadurch gekennzeichnet,**
**dass** die Formschlussverbindung an einem der Wischblattadapterelemente (56c, 57c) ausgebildete, parallel zur ersten Montage- bzw. Demontagerichtung (17) angeordnete Führungsstege (121) mit zwischen den Führungsstegen (121) ausgebildeten Aussparungen (122) aufweist, wobei in die Aussparungen (122) an dem anderen der Wischblattadapterelemente (57c, 56c) ausgebildete Haltestege (120) bis in eine Höhe unterhalb der Führungsstege (121) einführbar sind, und wobei die Haltestege (120) nach dem Einführen in die Führungsstege (121) in einer zur ersten Montage- bzw. Demontagerichtung (17) parallelen Richtung derart verschiebbar sind, dass die Haltestege (120) in Überdeckung mit den Führungsstegen (121) angeordnet sind.

15. Wischblatt nach Anspruch 14,
**dadurch gekennzeichnet,**
**dass** parallel zu den Führungsstegen (121) Anschlagstege (123) vorgesehen sind, dass der Abstand zwischen den Führungsstegen (121) und den Anschlagstegen (123) der Höhe (h) der Haltestege (120) entspricht, und dass die Anschlagstege (123) zumindest bereichsweise fluchtend zu den Aussparungen (122) angeordnet sind.

16. Wischblatt nach einem der Ansprüche 12 bis 15,
**dadurch gekennzeichnet,**
**dass** das erste Wischblattadapterelement (56b; 56c) oder das zweite Wischblattadapterelement (57b; 57c) wenigstens ein Anschlagelement (115, 116) aufweist, das als Bewegungsanschlag für die beiden Wischblattadapterelemente (56c, 57c) in Richtung der ersten Montage- bzw. Demontagerichtung (17) wirkt.

17. Wischeinrichtung (100) zum Reinigen von Fahrzeugscheiben (1), umfassend einen Wischarm (10) nach einem der Ansprüche 1 bis 4 und ein Wischblatt (50) nach einem der Ansprüche 5 bis 16.

## Claims

1. A wiper arm (10) for a windscreen wiper system of a motor vehicle, with a receiving region (11) for a wiper blade adapter (55), wherein in the receiving region (11) an adapter element (30; 30a) is arranged, serving for the supplying of washing fluid, wherein the adapter element (30; 30a) is able to be connected on the one hand with a supply line (32) for the washing fluid and on the other hand has at least one outlet (34) for the washing fluid, which is able to be connected with the wiper blade adapter (55), wherein the at least one outlet (34) is aligned with a first mounting or respectively dismantling direction (17) of the wiper blade adapter (55),wherein the at least one outlet (34) runs at least approximately in the direction of the longitudinal axis (14) of the wiper arm (10) in the receiving region (11), and wherein the receiving region (11) is constructed to enable a mounting or respectively dismantling of the wiper blade adapter (55) by two necessary movements on the wiper blade adapter in different mounting or respectively dismantling directions (17, 18), wherein the receiving region (11) has a U-shaped cross-section with two side walls (12) parallel to one another and with a transverse wall (13) connecting the two side walls (12),
**characterized in that** the receiving region comprises at least two receiving openings (23, 24) constructed on the side walls (12) to receive elevations (66) arranged on the wiper blade adapter (55) in the second mounting or respectively dismantling direction (18) running at least substantially perpendicularly to the transverse wall (13), wherein the adapter element (30; 30a) has on the side facing the side wall (12) respectively a fastening extension (36), which projects into a receiving opening (37) of the side wall (12) having a closed cross-section, and wherein the cross-sections of the receiving opening (37) and of the fastening extension (36) are coordinated with one another so that the adapter element (30; 30a) is arranged at least substantially in a stationary manner in the receiving opening (37).

2. The wiper arm according to Claim 1, **characterized in that** the adapter element (30; 30a) is constructed in addition for the supply of current of a wiper blade (50), having a heating device, by means of the wiper blade adapter (55).

3. The wiper arm according to Claim 2, **characterized in that** the current-carrying elements (35), serving for the supply of current, arranged on the side of the adapter element (30; 30a) facing the wiper blade adapter (55), are arranged parallel to the at least one outlet (34).

4. The wiper arm according to one of Claims 1 to 3, **characterized in that** on the side walls (12) in the region of an open front side (19) of the receiving region (11), projections (21) are provided, projecting away from the front side (19) and aligned with the side walls (12), which projections are constructed to hold the wiper blade adapter (55) in the receiving region (11) in its operating position in a direction running perpendicularly to the first mounting or respectively dismantling direction (17).

5. A wiper blade (50) for fastening to a wiper arm (10) according to one of Claims 1 to 4, with a wiper blade adapter (55), which is constructed to be received in a wiper arm (10), wherein at least one inlet (73) for the supplying of a washing fluid is arranged on the wiper blade adapter (55), and wherein the at least one inlet (73) is aligned parallel to a first mounting or respectively dismantling direction (17) of the wiper blade adapter (55),wherein the wiper blade adapter (55) consists of at least two wiper blade adapter elements (56; 56a; 56b; 56c, 57; 57a; 57b; 57c, 58; 58b), and wherein the at least two wiper blade adapter elements (56; 56a; 56b; 56c, 57; 57a; 57b; 57c, 58; 58b) are constructed to be received in the wiper arm (10) in a second mounting or respectively dismantling direction (18) arranged substantially perpendicularly to the first mounting or respectively dismantling direction (17),
**characterized in that** on a first wiper blade adapter element (56; 56a) of the wiper blade adapter (55), elevations (66) are constructed on its side walls for introduction in receiving openings (23, 24)), and that at least some of the elevations (66) are locked by the second wiper blade adapter element (57; 57a) in the operating position of the wiper blade (50) in the receiving openings (23, 24) of the wiper arm.

6. The wiper blade according to Claim 5, **characterized in that** between two of the wiper blade adapter elements (56, 57) a detent connection (65) is constructed, which fixes the two wiper blade adapter elements (56, 57) with respect to one another in the direction of the first mounting or respectively dismantling direction (17).

7. The wiper blade according to Claim 5, **characterized in that** between the second wiper blade adapter element (57a) and the adapter element (30a) a detent connection is constructed, which fixes the second wiper blade adapter element (57a) in the direction of the first mounting or respectively dismantling direction (17).

8. The wiper blade according to one of Claims 5 to 7, **characterized in that** in the second wiper blade adapter element (57; 57a) openings (72) are provided for the receiving of projections (21) constructed on the wiper arm (10), which are constructed to hold the wiper blade adapter (55) in its operating position in a direction running perpendicularly to the first mounting or respectively dismantling direction (17).

9. The wiper blade according to one of Claims 5 to 8, **characterized in that** the wiper blade adapter (55) comprises a third wiper blade adapter element (58; 58b), which is connected directly with a wiper blade body (52) of the wiper blade (50), and that the first and the third wiper blade adapter element (56; 56a, 58; 58b) are arranged swivelably with respect to one another.

10. The wiper blade according to Claim 9, **characterized in that** the third wiper blade adapter element (58) has a U-shaped cross-section, in which the second wiper blade adapter element (57; 57a) is received at least partially, and that the first wiper blade adapter element (56; 56a) has a U-shaped cross-section, which partially receives the second wiper blade adapter element (57; 57a) and encompasses the third wiper blade adapter element (58) in the region of its side walls.

11. The wiper blade according to Claim 9 or 10, **characterized in that** the second wiper blade adapter element (57; 57a) has extensions (80), which are arranged swivelably and displaceably into guide slots (81) of the third wiper blade adapter element (58).

12. The wiper blade according to one of Claims 5 to 11, **characterized in that** the first wiper blade adapter element (56b; 56c) and the second wiper blade adapter element (57b; 57c) are positioned with respect to one another by a form-fitting connection in the direction of the second mounting or respectively dismantling direction (18).

13. The wiper blade according to Claim 12, **characterized in that** the form-fitting connection comprises detent hook elements (104, 105) constructed on one of the wiper blade adapter elements (56b, 57b), which detent hook elements embrace guides (107, 108) constructed on the other of the wiper blade adapter elements (57b, 56b), and that the detent hook elements (104, 105) are constructed such that through a relative movement of the two wiper blade adapter elements (56b, 57b) in the direction of the second mounting or respectively dismantling direction (18), the detent hook elements (104, 105) embrace the guides (107, 108) and, in doing so, lock them in position.

14. The wiper blade according to Claim 12, **characterized in that** the form-fitting connection has guide webs (121) constructed on one of the wiper blade adapter elements (56c, 57c), arranged parallel to the first mounting or respectively dismantling direction (17), with recesses (122) formed between the guide webs (121), wherein holding webs (120) constructed on the other of the wiper blade adapter elements (57c, 56c) are able to be introduced into the recesses (122) into a height beneath the guide webs (121), and wherein the holding webs (120) after the introduction into the guide webs (121) are displaceable in a direction parallel to the first mounting or respectively dismantling direction (17) such that the holding webs (120) are arranged in overlap with the guide webs (121).

15. The wiper blade according to Claim 14, **characterized in that** stop webs (123) are provided parallel the guide webs (121), that the distance between the guide webs (121) and the stop webs (123) corresponds to the height (h) of the holding webs (120), and that the stop webs (123) are arranged at least partially aligned to the recesses (122).

16. The wiper blade according to one of Claims 12 to 15, **characterized in that** the first wiper blade adapter element (56b; 56c) or the second wiper blade adapter element (57b; 57c) has at least one stop element (115, 116), which acts as a movement stop for the two wiper blade adapter elements (56c, 57c) in the direction of the first mounting or respectively dismantling direction (17).

17. A wiper device (100) for cleaning vehicle windows (1), comprising a wiper arm (10) according to one of Claims 1 to 4 and a wiper blade (50) according to one of Claims 5 to 16.

## Revendications

1. Bras d'essuyage (10) pour une installation d'essuie-glace d'un véhicule automobile, avec une zone de réception (11) pour un adaptateur de balai d'essuie-glace (55), dans lequel un élément d'adaptateur (30; 30a) servant pour l'arrivée de liquide de lavage est disposé dans la zone de réception (11), dans lequel l'élément d'adaptateur (30; 30a) peut d'une part être raccordé à une conduite d'alimentation (32) pour le liquide de lavage et présente d'autre part au moins une sortie (34) pour le liquide de lavage, qui peut être raccordée à l'adaptateur de balai d'essuie-glace (55), dans lequel ladite au moins une sortie (34) est alignée avec une première direction de montage ou de démontage (17) de l'adaptateur de balai d'essuie-glace (55), dans lequel ladite au moins une sortie (34) s'étend au moins approximativement dans la direction de l'axe longitudinal (14) du bras d'essuyage (10) dans la zone de réception (11), et dans lequel la zone de réception (11) est configurée de façon à permettre un montage ou un démontage de l'adaptateur de balai d'essuie-glace (55) par deux mouvements nécessaires à l'adaptateur de balai d'essuie-glace dans différentes directions de montage ou de démontage (17, 18),
dans lequel la zone de réception (11) présente une section transversale en forme de U avec deux parois latérales parallèles l'une à l'autre (12) et une paroi transversale (13) reliant les deux parois latérales (12),
**caractérisé en ce que** la zone de réception (11) est dotée d'au moins deux ouvertures de réception (23, 24) formées dans les parois latérales (12) pour la réception de bosses (66) disposées sur l'adaptateur de balai d'essuie-glace (55) dans la deuxième direction de montage ou de démontage (18),
dans lequel les ouvertures de réception (23, 24) s'étendent au moins essentiellement perpendiculairement à la paroi transversale (13), dans lequel l'élément d'adaptateur (30; 30a) présente sur le côté tourné vers la paroi latérale (12) respectivement un prolongement de fixation (36), qui pénètre dans une ouverture de réception (37) présentant une section transversale fermée dans la paroi latérale (12), et dans lequel les sections transversales de l'ouverture de réception (37) et du prolongement de fixation (36) sont accordées l'une à l'autre, de telle manière que l'élément d'adaptateur (30; 30a) soit disposé de façon au moins essentiellement immobile dans l'ouverture de réception (37) .

2. Bras d'essuyage selon la revendication 1, **caractérisé en ce que** l'élément d'adaptateur (30; 30a) est configuré en outre pour l'alimentation électrique d'un balai d'essuie-glace (50) présentant un dispositif de chauffage au moyen de l'adaptateur de balai d'essuie-glace (55).

3. Bras d'essuyage selon la revendication 2, **caractérisé en ce que** les éléments de conduite de courant (35) servant pour l'alimentation électrique disposés sur le côté de l'adaptateur de balai d'essuie-glace (55) tourné vers l'élément d'adaptateur (30; 30a) sont disposés parallèlement à ladite au moins une sortie (34).

4. Bras d'essuyage selon l'une quelconque des revendications 1 à 3, **caractérisé en ce qu'**il est prévu sur les parois latérales (12), dans la région d'un côté frontal ouvert (19) de la zone de réception (11), des protubérances (21) saillantes sur le côté frontal (19) et alignées avec les parois latérales (12), qui sont configurées pour maintenir l'adaptateur de balai d'essuie-glace (55) dans la zone de réception (11) dans sa position de service dans une direction s'étendant perpendiculairement à la première direction de montage ou de démontage (17).

5. Balai d'essuie-glace (50), à fixer à un bras d'essuyage (10) selon l'une quelconque des revendications 1 à 4, avec un adaptateur de balai d'essuie-glace (55), qui est configuré de façon à être logé dans un bras d'essuyage (10), dans lequel au moins une entrée (73) pour l'arrivée d'un liquide de lavage est disposée sur l'adaptateur de balai d'essuie-glace (55), dans lequel ladite au moins une entrée (73) est orientée parallèlement à une première direction de montage ou de démontage (17) de l'adaptateur de balai d'essuie-glace (55), dans lequel l'adaptateur de balai d'essuie-glace (55) se compose d'au moins deux éléments d'adaptateur de balai d'essuie-glace (56; 56a; 56b; 56c, 57; 57a; 57b; 57c, 58; 58b), et dans lequel lesdits au moins deux éléments d'adaptateur de balai d'essuie-glace (56; 56a; 56b; 56c, 57; 57a; 57b; 57c, 58; 58b) sont configurés de façon à être logés dans le bras d'essuyage (10) dans une seconde direction de montage ou de démontage (18) essentiellement perpendiculaire à la première direction de montage ou de démontage (17),
**caractérisé en ce que** des bosses (66) à introduire dans des ouvertures de réception (23, 24) du bras d'essuyage (10) sont formées sur un premier élément d'adaptateur de balai d'essuie-glace (56; 56a) de l'adaptateur de balai d'essuie-glace (55), sur les parois latérales de celui-ci, et **en ce qu'**au moins certaines des bosses (66) sont bloquées dans la position de service du balai d'essuie-glace (50) dans les ouvertures de réception (23, 24) du bras d'essuyage au moyen du deuxième élément d'adaptateur de balai d'essuie-glace (57; 57a).

6. Balai d'essuie-glace selon la revendication 5, **caractérisé en ce qu'**un assemblage par encliquetage (65) est formé entre deux des éléments d'adaptateur de balai d'essuie-glace (56, 57), qui fixe les deux éléments d'adaptateur de balai d'essuie-glace (56, 57) l'un par rapport à l'autre dans la direction de la première direction de montage ou de démontage (17).

7. Balai d'essuie-glace selon la revendication 5, **caractérisé en ce qu'**un assemblage par encliquetage est formé entre le deuxième élément d'adaptateur de balai d'essuie-glace (57a) et l'élément d'adaptateur (30a), qui fixe le second élément d'adaptateur de balai d'essuie-glace (57a) dans la direction de la première direction de montage ou de démontage (17).

8. Balai d'essuie-glace selon l'une quelconque des revendications 5 à 7, **caractérisé en ce qu'**il est prévu dans le deuxième élément d'adaptateur de balai d'essuie-glace (57; 57a) des ouvertures (72) destinées à recevoir des protubérances (21) formées sur le bras d'essuyage (10), qui sont configurées de façon à maintenir l'adaptateur de balai d'essuie-glace (55) dans sa position de service dans une direction s'étendant perpendiculairement à la première direction de montage ou de démontage (17).

9. Balai d'essuie-glace selon l'une quelconque des revendications 5 à 8, **caractérisé en ce que** l'adaptateur de balai d'essuie-glace (55) comprend un troisième élément d'adaptateur de balai d'essuie-glace (58; 58b), qui est assemblé directement à un corps de balai d'essuie-glace (52) du balai d'essuie-glace (50), et **en ce que** le premier et le troisième éléments d'adaptateur de balai d'essuie-glace (56; 56a; 58; 58b) sont disposés de façon pivotante l'un par rapport à l'autre.

10. Balai d'essuie-glace selon la revendication 9, **caractérisé en ce que** le troisième élément d'adaptateur de balai d'essuie-glace (58) présente une section transversale en forme de U, dans laquelle le deuxième élément d'adaptateur de balai d'essuie-glace (57; 57a) est logé au moins localement, et **en ce que** le premier élément d'adaptateur de balai d'essuie-glace (56; 56a) présente une section transversale en forme de U, qui contient localement le deuxième élément d'adaptateur de balai d'essuie-glace (57; 57a) et entoure le troisième élément d'adaptateur de balai d'essuie-glace (58) dans la région de ses parois latérales.

11. Balai d'essuie-glace selon la revendication 9 ou 10, **caractérisé en ce que** le deuxième élément d'adaptateur de balai d'essuie-glace (57; 57a) présente des prolongements (80), qui sont disposés de façon pivotante ou coulissante dans des fentes de guidage (81) du troisième élément d'adaptateur de balai d'essuie-glace (58).

12. Balai d'essuie-glace selon l'une quelconque des revendications 5 à 11, **caractérisé en ce que** le premier élément d'adaptateur de balai d'essuie-glace (56b; 56c) et le deuxième élément d'adaptateur de balai d'essuie-glace (57b; 57c) sont positionnés l'un par rapport à l'autre par un assemblage par emboîtement dans la direction de la seconde direction de montage ou de démontage (18).

13. Balai d'essuie-glace selon la revendication 12, **caractérisé en ce que** l'assemblage par emboîtement comprend des éléments de crochet d'encliquetage (104, 105) formés sur un des éléments d'adaptateur de balai d'essuie-glace (56b, 57b), qui entourent des guides (107, 108) formés sur l'autre des éléments d'adaptateur de balai d'essuie-glace (57b, 56b), et **en ce que** les éléments de crochet d'encliquetage (104, 105) sont configurés de telle manière que les éléments de crochet d'encliquetage (104, 105) entourent et de ce fait verrouillent les guides (107, 108) par un mouvement relatif des deux éléments d'adaptateur de balai d'essuie-glace (56b, 57b) dans la direction de la seconde direction de montage ou de démontage (18).

14. Balai d'essuie-glace selon la revendication 12, **caractérisé en ce que** l'assemblage par emboîtement présente des nervures de guidage (121) formées sur un des éléments d'adaptateur de balai d'essuie-glace (56c, 57c) et disposées parallèlement à la première direction de montage ou de démontage (17), avec des découpes (122) formées entre les nervures de guidage (121), dans lequel des nervures de maintien (120) formées sur l'autre des éléments d'adaptateur de balai d'essuie-glace (57c, 56c) peuvent être introduites dans les découpes (122) jusqu'à une hauteur en dessous des nervures de guidage (121), et dans lequel les nervures de maintien (120) peuvent, après l'introduction dans les nervures de guidage (121), coulisser dans une direction parallèle à la première direction de montage ou de démontage (17), de telle manière que les nervures de maintien (120) soient disposées en recouvrement avec les nervures de guidage (121).

15. Balai d'essuie-glace selon la revendication 14, **caractérisé en ce qu'**il est prévu des nervures de butée (123) parallèles aux nervures de guidage (121), **en ce que** la distance entre les nervures de guidage (121) et les nervures de butée (123) correspond à la hauteur (h) des nervures de maintien (120), et **en ce que** les nervures de butée (123) sont disposées au moins localement en alignement avec les découpes (122).

16. Balai d'essuie-glace selon l'une quelconque des revendications 12 à 15, **caractérisé en ce que** le premier élément d'adaptateur de balai d'essuie-glace (56b; 56c) ou le deuxième élément d'adaptateur de balai d'essuie-glace (57b; 57c) présente au moins un élément de butée (115, 116), qui agit comme butée de déplacement pour les deux éléments d'adaptateur de balai d'essuie-glace (56c, 57c) dans la direction de la première direction de montage ou de démontage (17).

17. Installation d'essuie-glace (100) pour le nettoyage de vitres de véhicule (1), comprenant un bras d'essuyage (10) selon l'une quelconque des revendications 1 à 4 et un balai d'essuie-glace (50) selon l'une quelconque des revendications 5 à 16.
